# EUROPEAN PATENT APPLICATION

(11) **EP 1 925 912 A2**
(43) Date of publication of application: **28.05.2008**
(21) Application number: 07022121.3
(22) Date of filing: 14.11.2007
(51) Int. Cl.: G01D 5/04, G01D 5/245

(54) **Absolute angle detecting apparatus**

(30) Priority: 24.11.2006 JP 2006317272
(71) Applicant: ALPS ELECTRIC CO., LTD., Tokyo 145-8501 (JP)
(72) Inventor: Sano, Tadashi, Tokyo 145-8501 (JP)
(74) Representative: Klunker . Schmitt-Nilson . Hirsch

(57) **Abstract**

The present invention provides an absolute angle detecting apparatus that has a simplified structure and is capable of reducing noise generated when gears engage with each other and accurately detecting the absolute angle of a rotating body at high resolution.

An absolute angle detecting apparatus includes: a rotating body A, a code wheel 1 that rotates with the rotation of the rotating body A, code patterns 2 and 3 that are formed on the code wheel 1, code detecting elements 4 to 7 that are provided opposite to the code patterns 2 and 3, a second toothed wheel 9 that engages with the code wheel 1, a rotating magnet 10 that is mounted to the second toothed wheel 9, and a magnetic sensor 11 that outputs a sine signal and a cosine signal having different phases using a variation in the direction of a magnetic field according to the rotation angle θ of the rotating magnet 10. The absolute angle detecting apparatus identifies sectors on the basis of signals output from the code detecting elements 4 to 7, and detects the absolute angle of each of the sectors on the basis of an arc tangent signal tan⁻¹θ that is calculated from signals detected by the magnetic sensor 11.

## Description

### BACKGROUND OF THE INVENTION

### 1. Field of the Invention

The present invention relates to an absolute angle detecting apparatus, and more particularly, to an absolute angle detecting apparatus that detects the rotation of a rotating body using a magnetic sensor, calculates an arc tangent (tan⁻¹θ) on the basis of a sine signal and a cosine signal output from the magnetic sensor, and calculates the absolute angle of the rotating body on the basis of the arc tangent.

### 2. Description of the Related Art

The applicant has proposed an absolute angle detecting apparatus that includes: a rotor that has first and second transmission gears; a first output gear that engages with the first transmission gear and continuously rotates with the rotation of the rotor; a first magnetic sensor whose resistance value varies due to a variation in the direction of a magnetic field caused by the rotation of a first permanent magnet that is mounted to the first output gear; a second output gear that is rotated by a predetermined angle whenever the rotor engaged with the second transmission gear rotates 180 degrees; and a second magnetic sensor whose resistance value varies due to a variation in the direction of a magnetic field caused by the rotation of a second permanent magnet that is mounted to the second output gear. In this structure, when the rotation angle of the rotor is θ, a signal Va corresponding to tan⁻¹θ is generated on the basis of signals sinθ and cosθ that are output from the first magnetic sensor, and a signal Vb having an output value that varies stepwise whenever the rotor rotates 180 degrees is generated on the basis of signals sinθ and cosθ that are output from the second magnetic sensor (for example, see JP-A-2003-329483 (Figs. 1 to 6)).

In the absolute angle detecting apparatus disclosed in JP-A-2003-329483, the period of the arc tangent signal tan⁻¹θ is half (180°) of the period (360°) of the signal sinθ and the signal cosθ. Therefore, it is possible to detect the rotation angle of the rotor that is rotated by an angle correspond to one or more sectors by identifying the rotation angle range of the rotor in which one sector has an angle of 180° on the basis of the output value of the signal Vb that varies stepwise whenever the rotor rotates 180° and by detecting the rotation angle of the rotor within one sector on the basis of the signal Va.

However, the absolute angle detecting apparatus disclosed in JP-A-2003-329483, filed by the applicant, includes a first transmission gear that is provided in an outer circumference of a rotor along a rotating axis direction, a second transmission gear having intermittent teeth, a first output gear that engages with the first transmission gear and has a rotating axis parallel to the rotating axis of the rotor, a second output gear that engages with the second transmission gear and has a rotating axis parallel to the rotating axis of the rotor, and two permanent magnets and magnetic sensors that are provided in the output gears. Therefore, the structure of a speed increasing mechanism becomes complicated. In addition, when the rotor rotates at a high speed, a harsh grating noise (rattling sound) is generated due to the engagement between the first transmission gear and the second transmission gear having intermittent teeth. The rotation angle of the rotor in each sector is detected on the basis of the signal Va corresponding to the value tan⁻¹θ that is calculated from the signals sinθ and cosθ. However, since one section has an angle of 180° and a variation in the signal Va per unit angle is small, a complicated circuit structure and a software process are needed to accurately detect the absolute angel of the rotor at high resolution.

### SUMMARY OF THE INVENTION

The invention is designed to solve these problems, and an object of the invention is to provide an absolute angle detecting apparatus that includes a speed increasing mechanism having a simplified structure, and is capable of reducing noise generated from the engagement between gears even when a rotating body rotates at a high speed and of accurately detecting the absolute angle of the rotating body at high resolution, without using a complicated circuit structure or a software process.

In order to achieve the object, according to an aspect of the invention, an absolute angle detecting apparatus includes: a rotating body; a code wheel that is mounted to the rotating body and rotates with the rotation of the rotating body; code patterns that are formed on the code wheel; code detecting elements that are arranged opposite to the code patterns; a rotating magnet that is connected to the rotating body or the code wheel through a speed increasing mechanism having a speed increasing ratio of 2n (n is a natural number); and a magnetic sensor that outputs a sine signal and a cosine signal using a variation in the direction of a magnetic field according to the rotation angle θ of the rotating magnet. In the absolute angle detecting apparatus, one rotation of the rotating body is divided into 4n sectors (n is a natural number), and the sectors are identified on the basis of signals output from the code detecting elements. An arc tangent signal tan⁻¹θ is generated from the sine signal and the cosine signal output from the magnetic sensor, and an absolute angle of each of the sectors is detected on the basis of the arc tangent signal tan⁻¹θ.

According to the above-mentioned structure, since the absolute angle detecting apparatus includes one code wheel, one speed increasing mechanism, one rotating magnet, and one magnetic sensor, the structure of a speed increasing mechanism can be simplified. In addition, since an intermittent gear is not used, it is possible to reduce noise generated from the engagement between gears even when the rotating body rotates at a high speed. Further, since the rotating magnet makes 2n rotations while the rotating body makes one rotation, it is possible to generate an arc tangent signal tan⁻¹θ having an angle of 90° or less as one period, and thus detect the absolute angle of the rotating body on the basis of the correspondence between each sector and the arc tangent signal tan⁻¹θ having an angle of 90° or less as one period. Therefore, it is possible to increase a variation in an arc tangent (tan⁻¹θ) per unit angle, as compared to the related art in which one sector has an angle of 180°, and it is possible to accurately detect the absolute angle of a rotating body at high resolution, without using a complicated circuit structure or a software process.

In the absolute angle detecting apparatus according to the above-mentioned aspect, preferably, the magnetic sensor includes magnetic detecting elements that output signals sinθ, cosθ, -sinθ, and -cosθ.

According to the above-mentioned structure, it is possible to calculate an arc tangent by calculating values sinθ/cosθ, -sinθ/-cosθ, cosθ/-sinθ, or -cosθ/sinθ, and thus improve the fail-safe characteristics of an absolute angle detecting apparatus. For example, when all of the magnetic detecting elements are in a normal state, it is possible to detect a correct absolute angle on the basis of an arc tangent calculated from values sinθ/cosθ and -sinθ/-cosθ. Similarly, it is possible to detect a correct absolute angle on the basis of an arc tangent calculated from values -sinθ/cosθ and cosθ/-sinθ. Even when any one of the magnetic detecting elements is out of order, it is possible to a correct absolute angle. For example, when the magnetic detecting element for detecting sinθ is out of order, it is possible to calculate an arc tangent by calculating a value -sinθ/cosθ on the basis of signals output from the magnetic detecting elements for detecting -sinθ and -cosθ, instead of calculating the value sinθ/cosθ or by calculating a value cosθ/-sinθ on the basis of signals output from the magnetic detecting elements for detecting cosθ and -sinθ, instead of calculating the value -cosθ/sinθ.

In the absolute angle detecting apparatus according to the above-mentioned aspect, preferably, the speed increasing mechanism includes: a first toothed wheel that forms the code wheel; and a second toothed wheel that has a rotating axis parallel to the rotating axis of the rotating body and engages with the first toothed wheel. Preferably, the rotating magnet is provided such that the center thereof is aligned with the rotation center of the second toothed wheel.

According to the above-mentioned structure, it is possible to simplify the structure of a speed increasing mechanism of an absolute angle detecting apparatus.

According to an embodiment of the invention, an absolute angle detecting apparatus includes: a rotating body; a code wheel that is mounted to the rotating body and rotates with the rotation of the rotating body; code patterns that are formed on the code wheel; code detecting elements that are arranged opposite to the code patterns; a rotating magnet that is connected to the rotating body or the code wheel through a speed increasing mechanism having a speed increasing ratio of 2n (n is a natural number); and a magnetic sensor that outputs a plurality of detection signals using a variation in the direction of a magnetic field according to the rotation angle θ of the rotating magnet. In the absolute angle detecting apparatus, one rotation of the rotating body is divided into 4n sectors (n is a natural number), and the sectors are identified on the basis of signals output from the code detecting elements. An arc tangent signal tan⁻¹θ is generated from the signals output from the magnetic sensor, and the absolute angle of each of the sectors is detected on the basis of the arc tangent signal tan⁻¹θ. According to the above-mentioned structure, it is possible to simplify the structure of a speed increasing mechanism of the absolute angle detecting apparatus. In addition, since an intermittent gear is not used, it is possible to reduce noise due to the engagement between gears even when the rotating body rotates at a high speed. Further, it is possible to detect the absolute angle of the rotating body on the basis of the correspondence between each sector and an arc tangent signal tan⁻¹θ having an angle of 90° or less as one period. Therefore, it is possible to increase a variation in an arc tangent (tan⁻¹θ) per unit angle, and it is possible to accurately detect the absolute angle of a rotating body at high resolution, without using a complicated circuit structure or a software process.

### BRIEF DESCRIPTION OF THE DRAWINGS

Fig. 1 is a diagram illustrating the structure of a speed increasing mechanism of an absolute angle detecting apparatus according to an embodiment of the invention;
Figs. 2A to 2D are diagrams illustrating the relationship between the output timing of signals from four code detecting elements for identifying sectors and a sector identifying digital code string that is allocated to each of the sectors;
Fig. 3 is a diagram illustrating the structure of a magnetic sensor provided in the absolute angle detecting apparatus according to the embodiment of the invention;
Fig. 4 is a block diagram illustrating the structure of a signal processing system of the absolute angle detecting apparatus according to the embodiment of the invention; and
Fig. 5 is a graph illustrating the relationship among signals that are output from the magnetic sensor, an arc tangent signal tan⁻¹θ that is obtained from the output signals, and sector division.

### DESCRIPTION OF THE PREFERRED EMBODIMENT

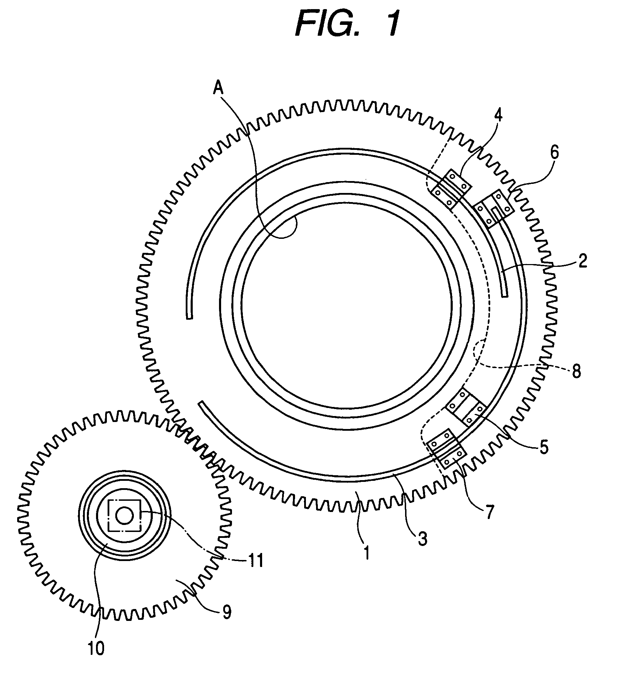

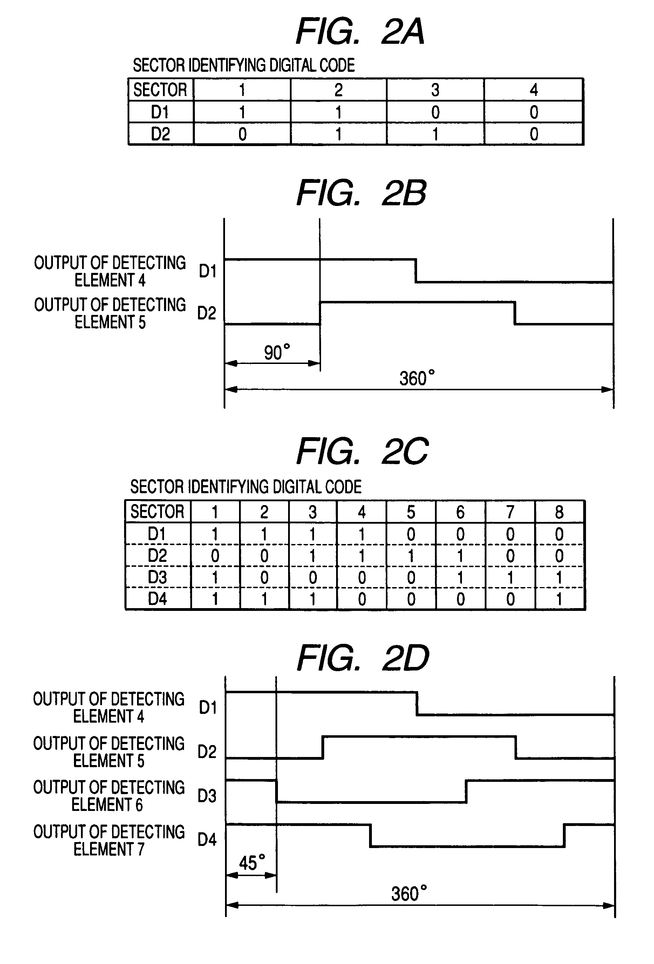

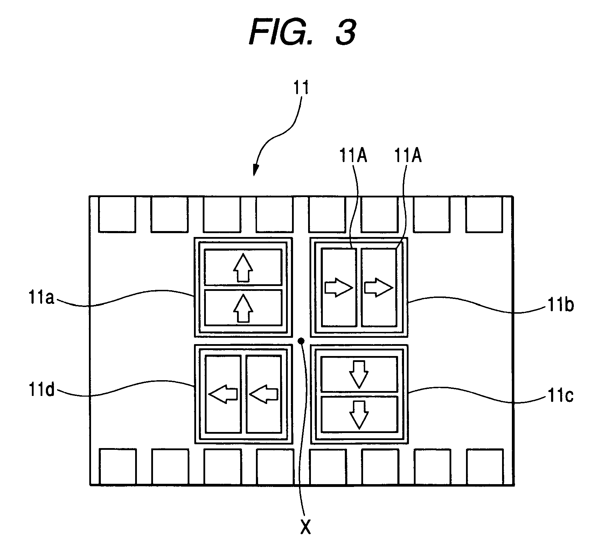

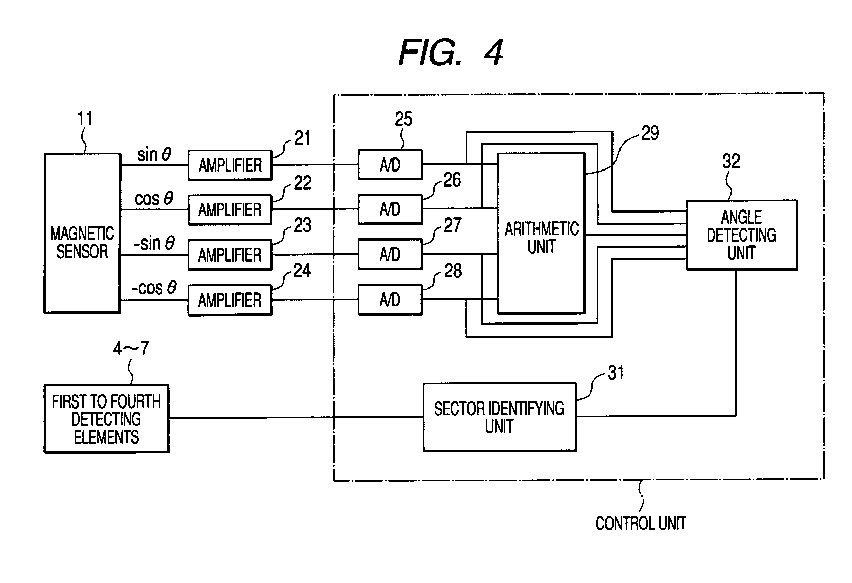

Hereinafter, an absolute angle detecting apparatus according to an embodiment of the invention will be described with reference to Figs. 1 to 5. Fig. 1 is a diagram illustrating the structure of a speed increasing mechanism of an absolute angle detecting apparatus according to an embodiment of the invention. Figs. 2A to 2D are diagrams illustrating the relationship between the output timing of signals from four code detecting elements for identifying sectors and a sector identifying digital code string allocated to each of the sectors. Fig. 3 is a diagram illustrating the structure of a magnetic sensor provided in the absolute angle detecting apparatus according to the embodiment of the invention. Fig. 4 is a block diagram illustrating the structure of a signal processing system of the absolute angle detecting apparatus according to the embodiment of the invention.

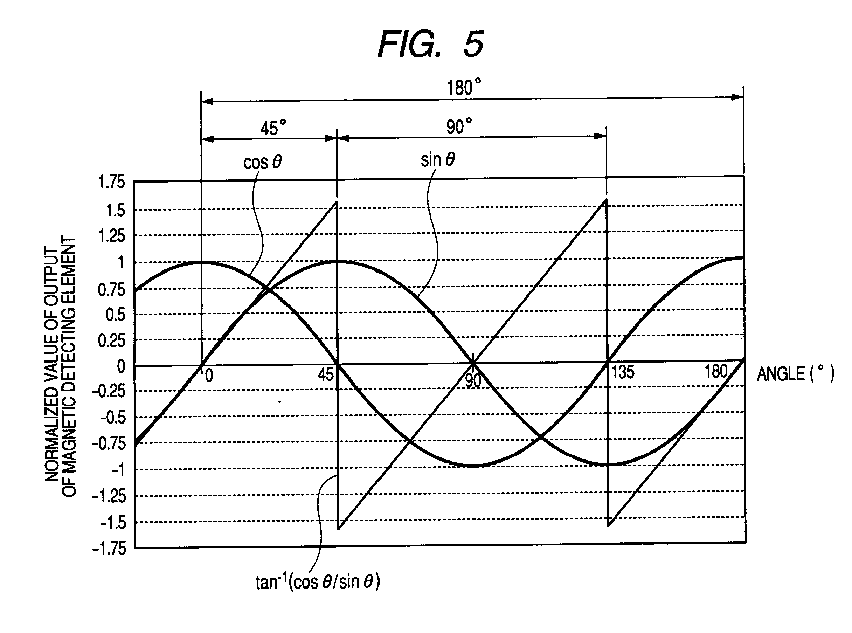

Fig. 5 is a graph illustrating the relationship among signals that are output from the magnetic sensor, an arc tangent signal tan⁻¹θ that is obtained from the output signals, and sector division.

As shown in Fig. 1, the absolute angle detecting apparatus according to this embodiment of the invention includes, as main components, a rotating body A, a first toothed wheel 1, serving as a code wheel that is concentric with the rotating axis of the rotating body A, first and second code patterns 2 and 3 that are formed on the circumference having the rotation center of the first toothed wheel 1 as its center, first and second detecting elements 4 and 5 that are provided opposite to the first code pattern 2, third and fourth detecting elements 6 and 7 that are provided opposite to the second code pattern 3, a circuit board 8 having the first to fourth detecting elements 4 to 7 mounted thereon, a second toothed wheel 9 that engages with the first toothed wheel 1, rotates with the rotation of the first toothed wheel 1, and has a rotating axis that is parallel to the rotating axis of the rotating body A, a ring-shaped rotating magnet 10 that is mounted to the second toothed wheel 9 so as to be concentric with the second toothed wheel 9, and a magnetic sensor 11 that outputs signals sinθ, cosθ, -sinθ, and -cosθ having one rotation of the second toothed wheel 9 (the rotating magnet 10) as one period using a variation in the direction of a magnetic field according to the rotation angle θ of the rotating magnet 10.

The first toothed wheel 1 and the second toothed wheel 9 form a speed increasing mechanism of the rotating magnet 10 for the rotating body A. In the speed increasing mechanism, the number of teeth of the second toothed wheel is smaller than that of the first toothed wheel 1 such that the number of rotations of the second toothed wheel 9 is larger than that of the first toothed wheel 1, and the number of teeth of each of the toothed wheels is set according to a speed increasing ratio. The speed increasing ratio can be set to an arbitrary value. However, in this embodiment, the speed increasing ratio may be set to a multiple of a natural number that is equal to or greater than 2, in order to easily set sectors that are obtained by dividing one rotation of the rotating body A and to easily detect an angle within each of the divided sectors. In this embodiment, the number of teeth of the first toothed wheel 1 is set to 112, and the number of teeth of the second toothed wheel 9 is set to 56, so that the second toothed wheel 9 (the rotating magnet 10) makes two rotations while the first toothed wheel 1 (the rotating body A) makes one rotation. Therefore, during one rotation of the first toothed wheel 1, magnetic detecting elements 11a, 11b, 11c, and 11d output signals sinθ, cosθ, -sinθ, and cosθ corresponding to two periods (one period is 180°).

The first and second code patterns 2 and 3 each have a light shielding plate, and photo interrupters, each formed by combining a light emitting element with a light receiving element, are used as the first to fourth code detecting elements 4 to 7. The first to fourth code detecting elements 4 to 7 are mounted on the circuit board 8 such that the light emitting element and the light receiving element are provided at both sides of each of the first and second code patterns 2 and 3. In the absolute angle detecting apparatus according to this embodiment, the first and second code patterns 2 and 3 and the first to fourth code detecting elements 4 to 7 are arranged on the first toothed wheel 1 such that the code detecting elements 4 to 7 output signals D1 to D4 at the timing shown in Fig. 2E, respectively, while the first toothed wheel 1 (the rotating body A) makes one rotation.

As shown in Fig. 2B, when a high-level signal is referred to as '1' and a low-level signal is referred to as '0' in the output signals D1 and D2, digital code strings, each composed of the output signals D1 and D2, are different from each other for four sectors obtained by equally dividing one rotation (360°) of the first toothed wheel, as shown in Fig. 2A. These digital code strings are output as sector identifying signals from the sector identifying unit 31 shown in Fig. 4. When one rotation of the first toothed wheel 1 (the rotating body A) is equally divided into four sectors (one sector is 90°), different digital codes can be allocated to the sectors. Therefore, it is possible to identify the sectors by detecting these digital codes.

For example, the signals D1 to D4 that are respectively output from the code detecting elements 4 to 7 shown in Fig. 1 at the timing shown in Fig. 2D may be used in order to equally divide one rotation (360°) of the first toothed wheel 1 into 8 sectors and to generate different digital code strings for the divided sectors, as shown in Fig. 2E.

As shown in Fig. 3, the magnetic sensor 11 includes four magnetic detecting elements 11a, 11b, 11c, and 11d, and each of the magnetic detecting elements has two rectangular magnetoresistive elements 11A that are magnetized in their lateral directions. In addition, the magnetic detecting elements 11a, 11b, 11c, and 11d are formed such that the magnetized directions thereof are orthogonal to each other. In this way, a bridge circuit (not shown) having eight magnetoresistive elements as resistive elements is formed, and the bridge circuit is mounted on a substrate that is fixed to a fixing member (not shown). Each of the magnetoresistive elements is formed of a ferromagnetic film having an anisotropic magnetoresistance effect, and the resistance value thereof is changed according to the direction of a magnetic field applied to the magnetic sensor (a variation in the direction of the magnetic field).

Since a point X that is equidistant from the magnetic detecting elements 11a, 11b, 11c, and 11d is concentric with the rotation center of the rotating magnet 10, the rotation of the rotating magnet 10 causes the magnetic detecting elements 11a, 11b, 11c, and 11d to respectively output signals sinθ, cosθ, -sinθ, and -cosθ having phases that deviate from each other by a quarter period (45°). For example, magnetoresistive elements or Hall elements may be used as the magnetic detecting elements. It is preferable to use the magnetoresistive elements since little variation occurs in the output of the magnetoresistive element even when the temperature varies.

As shown in Fig. 4, a signal processing system of the absolute angle detecting apparatus according to this embodiment includes, as main components, first to fourth amplifiers 21 to 24 that amplify the signals sinθ, cosθ, - sinθ, and -cosθ output from the magnetic sensor 11, A/D converters 25 to 28 that convert the amplified signals sinθ, cosθ, -sinθ, and -cosθ into digital signals, an arithmetic unit 29 that calculates tan⁻¹θ, that is, sinθ/cosθ, -sinθ/-cosθ, cosθ/-sinθ, or -cosθ/sinθ, on the basis of the converted signals sinθ, cosθ, -sinθ, and - cosθ, a sector identifying unit 31 that identifies a plurality of sectors formed by equally dividing one rotation of the rotating body A, on the basis of plural-bit digital codes that are input from the first to fourth code detecting elements 4 to 7, and an angle detecting unit 32 that detects the absolute angle of the rotating body A on the basis of the arc tangent signal tan⁻¹θ output from the arithmetic unit 29 and the sector identifying signal output from the sector identifying unit 31.

Next, the relationship between the division of sectors and the arc tangent signal tan⁻¹θ that is calculated from output signals of the magnetic sensor 11 will be described below with reference to Fig. 5.

As described above, while the rotating body A makes one rotation, the magnetic detecting elements 11a, 11b, 11c, and 11d output the signals sinθ, cosθ, -sinθ, and - cosθ corresponding to two periods, respectively. Fig. 5 shows only the signals sinθ and cosθ that are respectively output from the magnetic detecting elements 11a and 11b, except for the signals -sinθ and -cosθ that are respectively output from the magnetic detecting elements 11c and 11d. The signals have a phase difference of 45°. When the arithmetic unit 29 uses these signals to calculate sinθ/cosθ, an arc tangent signal tan⁻¹θ having 90° as one period is obtained. That is, in the absolute angle detecting apparatus according to this embodiment, while the rotating body A makes one rotation, the arithmetic unit 29 outputs the arc tangent signal tan⁻¹θ for four periods. Therefore, the angle detecting unit 32 makes the arc tangent signal tan⁻¹θ having 90° as one period that is output from the arithmetic unit 29 correspond to the sector identifying signal (the digital code string shown in Fig. 2A) that is output from the sector identifying unit 31, thereby detecting the absolute angle of the rotating body A.

For example, in order to divide one rotation of the rotating body A into eight sectors and detect the absolute angle of the rotating body A, the number of teeth of the first toothed wheel 1 and the number of teeth of the second toothed wheel 9 may be set such that, while the first toothed wheel 1 makes one rotation (360°), the second toothed wheel 9 makes four rotations, and an arc tangent signal tan⁻¹θ having 45° as one period that is output from the arithmetic unit 29 may correspond to the sector identifying signals, which are eight different digital code strings for the divided sectors shown in Fig. 2E.

Further, since the magnetic detecting elements 11a, 11b, 11c, and 11d of the magnetic sensor 11 output the signals sinθ, cosθ, -sinθ, and -cosθ, respectively, it is possible to improve fail-safe characteristics of the absolute angle detecting apparatus. For example, when all of the magnetic detecting elements are in a normal state, it is possible to detect a correct absolute angle on the basis of an arc tangent obtained from, for example, the values sinθ/cosθ and -sinθ/-cosθ. Similarly, it is possible to detect an absolute angle on the basis of an arc tangent obtained from the values -sinθ/-cosθ and cosθ/-sinθ. When some of the magnetic detecting elements are out of order, for example, when the magnetic detecting element for detecting the signal sinθ is out of order, instead of the value sinθ/cosθ, the value -sinθ/cosθ can be used to calculate an arc tangent, on the basis of signals that are output from the magnetic detecting elements for detecting the signals -sinθ and - cosθ, thereby detecting the absolute angle of the rotating body A. Alternatively, instead of the value - cosθ/sinθ, the value cosθ/-sinθ can be used to calculate an arc tangent, on the basis of signals that are output from the magnetic detecting elements for detecting the signals -sinθ and cosθ, thereby detecting the absolute angle of the rotating body A.

As described above, the absolute angle detecting apparatus according to this embodiment includes the rotating body A, the first toothed wheel (code wheel) 1 that is attached to the rotating body A and rotates with the rotation of the rotating body A, the first and second code patterns 2 and 3 that are formed on the first toothed wheel 1, the first to fourth code detecting elements 4 to 7 that are provided opposite to the code patterns 2 and 3, the second toothed wheel 9 that engages with the first toothed wheel 1 and rotates at a speed increasing ratio of 2n (n is a natural number) with respect to the first toothed wheel 1, the rotating magnet 10 that is mounted to the second toothed wheel 9, and the magnetic sensor 11 that outputs a sine signal and a cosine signal having different phases using a variation in the direction of a magnetic field according to the rotation angle θ of the rotating magnet 10. According to this structure, it is possible to simplify the structure of a speed increasing mechanism and reduce noise generated when the first and second toothed wheels engage with each other even when the rotating body rotates at a high speed. In addition, in the above-mentioned structure, when the rotating body A makes one rotation, the rotating magnet 10 makes 2n rotations. Therefore, it is possible to generate an arc tangent signal tan⁻¹θ having an angle of 90° or less as one period, and make the sector identifying signal for each sector correspond to the arc tangent signal tan⁻¹θ having an angle of 90° or less as one period to detect the absolute angle of the rotating body. As a result, it is possible to increase a variation in an arc tangent per unit angle, as compared to the related art in which one sector has an angle of 180°, and thus accurately detect the absolute angle of the rotating body at high resolution, without using a complicated circuit structure or a software process. For example, it is possible to detect the absolute angle of the rotating body A at a resolution of 0.1° to 0.5° or more.

In the speed increasing mechanism according to this embodiment, the first toothed wheel 1 formed on the code wheel engages with the second toothed wheel 9 having a rotating axis that is parallel to the rotating axis of the rotating body A, and the rotating magnet 10 is integrally formed with the second toothed wheel 9 while the center (a point that is equidistant from the magnetic detecting elements) of the rotating magnet 10 is concentric with the rotating axis of the second toothed wheel 9. In this way, it is possible to simplify the structure of a speed increasing mechanism of the absolute angle detecting apparatus. However, the invention is not limited thereto. For example, the following structure may be used: a code wheel without a gear is used as the first toothed wheel 1; a toothed wheel is provided in the rotating body A; and the toothed wheel engages with the second toothed wheel 9 having a rotating axis that is parallel to the rotating axis of the rotating body A. As another structure, a gear may be formed in the rotating body A, and the gear may engage with the second toothed wheel 9 having a rotating axis that is parallel to the rotating axis of the rotating body A.

Furthermore, in the above-described embodiment, the digital code detecting unit is formed by combining the light shielding plate with the photo interrupter, but the invention is not limited thereto. The digital code detecting unit may be formed by, for example, a combination of an optical pattern, such as clearance holes or cutouts, and the photo interrupter, a combination of a magnetic pattern and the magnetic detecting elements, or a combination of a resistor pattern and a collecting brush.

Further, in the above-described embodiment, the code patterns 2 and 3 are formed on the first toothed wheel 1, but the invention is not limited thereto. The code patterns 2 and 3 may be formed on a code wheel without teeth, and the first toothed wheel that is integrally formed with the code wheel so as to be concentric with the code wheel may engage with the second toothed wheel 9.

## Claims

1. An absolute angle detecting apparatus comprising:
a rotating body;
a code wheel that is mounted to the rotating body and rotates with the rotation of the rotating body;
code patterns that are formed on the code wheel;
code detecting elements that are arranged opposite to the code patterns;
a rotating magnet that is connected to the rotating body or the code wheel through a speed increasing mechanism having a speed increasing ratio of 2n (n is a natural number); and
a magnetic sensor that outputs a sine signal and a cosine signal using a variation in the direction of a magnetic field according to the rotation angle θ of the rotating magnet,
wherein one rotation of the rotating body is divided into 4n sectors (n is a natural number),
the sectors are identified on the basis of signals output from the code detecting elements,
an arc tangent signal tan⁻¹θ is generated from the sine signal and the cosine signal output from the magnetic sensor, and
an absolute angle of each of the sectors is detected on the basis of the arc tangent signal tan⁻¹θ.

2. The absolute angle detecting apparatus according to claim 1,
wherein the magnetic sensor includes magnetic detecting elements that output signals sinθ, cosθ, -sinθ, and -cosθ.

3. The absolute angle detecting apparatus according to claim 1 or 2,
wherein the speed increasing mechanism includes:
a first toothed wheel that forms the code wheel; and
a second toothed wheel that has a rotating axis parallel to the rotating axis of the rotating body and engages with the first toothed wheel, and
the rotating magnet is provided such that the center thereof is aligned with the rotation center of the second toothed wheel.
